# EUROPEAN PATENT APPLICATION

(11) **EP 4 240 106 A1**
(43) Date of publication of application: **06.09.2023**
(21) Application number: 22159837.8
(22) Date of filing: 02.03.2022
(51) Int. Cl.: H05B 6/06

(54) **METHOD OF CONTROLLING A QUASI RESONANT CONVERTER AND RELATED INDUCTION COOKTOP**

(71) Applicant: Whirlpool Corporation, Benton Harbor, MI 49022 (US)
(72) Inventor: Baldo, Salvatore, 21024 Cassinetta di Biandronno (VA) (IT); Gallivanoni, Andrea, 21024 Cassinetta di Biandronno (VA) (IT); Pastore, Cristiano Vito, 21024 Cassinetta di Biandronno (VA) (IT); Zoppi, Andrea, 21024 Cassinetta di Biandronno (VA) (IT)
(74) Representative: Spina, Alessandro

(57) **Abstract**

The ticking noise that can be heard when the QR-converter is operated to deliver a power level smaller than the minimum power level for having a soft-switching is due to the fact that during the OFF interval there is no power delivery and the DC-bus capacitance is charged at the peak of rectified mains line voltage.

This drawback may be overcome by discharging purposely the DC-bus during an OFF interval of the QR-converter so as the DC-bus is substantially discharged when a new ON interval of the QR-converter is started.

## Description

### TECHNICAL FIELD

The present disclosure relates to voltage converters and more in particular to methods of controlling a quasi resonant converter usable for realizing induction cooktops and for induction heating items of cookware placed above a heating coil powered by the quasi resonant converter.

### BACKGROUND

Cooking appliances, in particular induction cooking appliances, are known from the prior art which have at least one main switching unit to supply induction heating elements with a supply voltage through actuation of a main energy supply, and an energy storage unit, in particular a bus capacitor, which is provided in particular for signal smoothing through the charging of an energy storage unit with a charge potential.

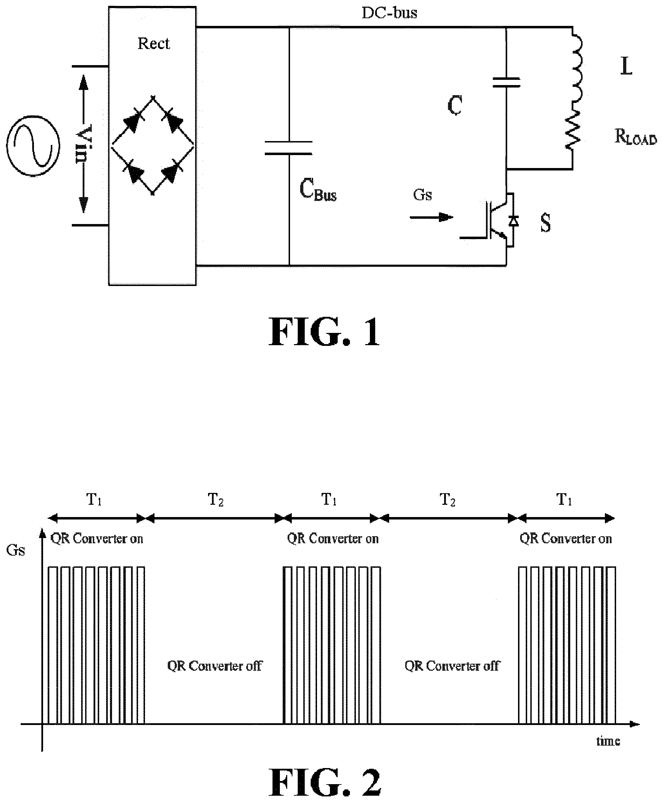

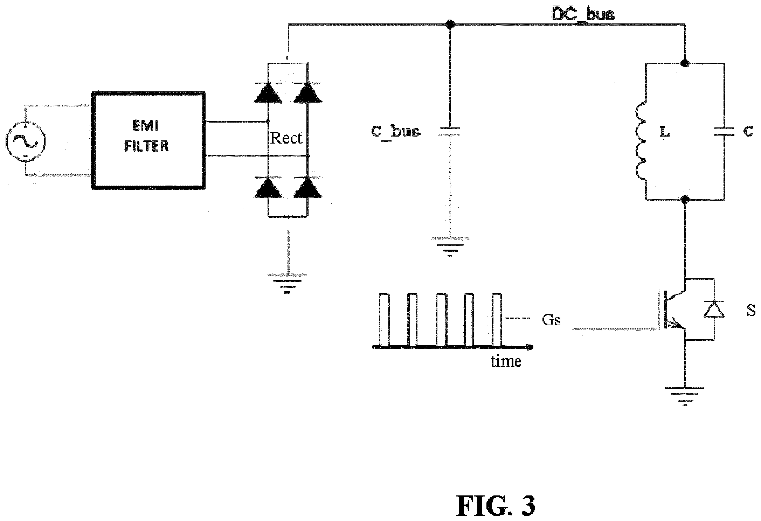

QR converters are a particular type of switching units that are widely used as AC current generators for induction cooktops. Such class of converters, also called Single Ended converters, are particularly attractive because they use just one solid state switch and only one resonant capacitor to generate a variable frequency/variable amplitude current to feed the induction coil. When properly designed and matched with their load, these converters are known to operate in the so called "soft-switching" mode, which consists in having the switching device commutating when either the voltage across it and/or the current flowing through it are null. In that sense QR converters are the best compromise between cost and energy conversion efficiency. Examples of QR converters are shown in figures 1 and 3. Basically, a QR converter comprises:
- a rectifier stage Rect having input AC terminals, for receiving an AC voltage to be rectified, and a DC-bus having a high-side line for making available a DC voltage on the DC-bus between the high-side line and the low-side line, wherein the DC voltage is generated as a rectified replica of the AC voltage received at the input AC terminals;
- a L-C resonant pair connected between the high-side line and an intermediate node, configured to be magnetically coupled with a load. For example, the inductive component L of the L-C resonant pair may be the heating coil of an induction cooktop, and the capacitive component C of the resonant pair may be a capacitor dimensioned to determine a resonance frequency of the L-C resonant pair;

- a controlled output switch S connected in series with the L-C resonant pair between the intermediate node and the low-side line;
- a control unit (not shown) configured to turn on/off the controlled output switch S.

The QR converter of figure 3 comprises an optional electromagnetic interference filter, in order to prevent electromagnetic interference from the power converter.

The drawback of this kind of converters lies in the very narrow range of output power being achievable in the Soft-Switching regime. In particular, when the output power being regulated falls below a given limit, the inverter fails in operating in soft switching mode, leading to a dramatic and unmanageable increase in thermal losses (hard switching) and Electromagnetic Interference (a.k.a. EMI). Those limitations lead to a relatively low regulation range, which is defined as the ratio between maximum achievable power (limited by maximum voltage across the switch) and the minimum achievable power (limited by the losses for hard switching at turn on).

This situation becomes an issue especially when the user wants to supply low power to the pan.

The simplest mode for overcoming the aforementioned limitation for QR converter is to operate the inverter in the so-called burst-mode or ON-OFF mode (as shown in Fig. 2), consisting in operating the converter for some amount of time T₁, during which several charging phases and discharging phases occur, at the minimum power level adjustable according to ZVS conditions, and switching it off for another amount of time T₂. By cyclically alternating over time the two intervals, the average power delivered to the load can be calculated by multiplying the duty ratio T₁/(T₁ + T₂) by the minimum power limit (the minimum settable power in ZVS mode).

For example, if the user wants to supply 100 W and the minimum power to have low soft switching is 700 W, the system must operate in the so-called ON / OFF mode, in which the 700 W are supplied for a short time interval T₁, and for the remainder of the time interval T₂ the converter is kept off, to obtain an average power delivery of 100 W. In this functioning mode, two annoying things happen:
- a ticking acoustic noise from the pan is produced;
- the output switch S produces a large amount of dissipated power (high hard-switching) at the first activation after the T₂ interval. This stress is often outside of the SOA (Safe Operating Area) allowed by the device itself.

Another situation where ticking noise occurs is during the so-called "pan detection" operation, that is when the presence of a cooking vessel on an induction heating cooktop is detected. Typically, the detection of the cooking utensil is accomplished by feeding power to the induction heating coils and by assessing at least an electrical parameter of the QR converters of the induction heating cooktop which is modified when a cooking utensil is placed on one or more induction coils.

### SUMMARY

During operation of a Quasi Resonant converter, it is not infrequent that a ticking acoustic noise is generated, for example when the converter is delivering to the cooking utensil a power lower than the minimum power required for the converter to operate in the soft-switching mode. In this situation, and other similar conditions, there is a large amount of energy transferred to the cooking utensil in a short interval of time, such interval being comparable to the switching time of the controlled output switch S. For example, this can happen when the DC-bus capacitance is charged at the peak of the rectified mains line voltage (e.g. 325 V for nominal RMS line voltage of 230 V), and the controlled output switch S is turned on for the first time after a long period of being kept off. For example, if the converter is kept inactive for at least 10 ms, the first time it is turned on again after that period has elapsed this situation will occur. In those same conditions, there is also a large amount of power dissipation occurring in the output switch S, the so-called hard-switching condition. Obviously, this problem also occurs every time the output switch S is turned ON for the first time, after the main relay closure.

Given that one method to perform a pan detection operation is to stimulate the induction coils with short PWM pulses, and record the value of the electrical parameter of the converter, if the pan detection is operated when the DC-bus is charged, as explained in the previous paragraph, this would typically cause the annoying noise to be produced.

At least part of these drawbacks are overcome according to this disclosure by discharging purposely the DC-bus during an OFF interval of the QR-converter so as the DC-bus is substantially discharged when a new ON interval of the QR-converter is started.

This objective is at least partially achieved using the method defined in claim 1. According to an aspect, the DC-bus may be discharged during an OFF interval by closing the output switch S of the QR-converter.

According to an aspect, a QR-converter of this disclosure may be equipped with a control line that senses the voltage on the DC-bus and turns on/off the output switch of the QR-converter with a train of pulses so as the voltage on the DC-bus tracks a falling edge of a half-wave of the rectified AC input voltage.

The present invention has two technical advantages, as compared to the prior art:
1) it eliminates the occurrences of the ticking noise, thus resulting in a more pleasing experience for the user;
2) it reduces the power dissipation on the controlled output switch S, thereby increasing its useful life, resulting in a more reliable product, that is less subject to failures.

Preferred embodiments are defined in the annexed claims.

### BRIEF DESCRIPTION OF THE DRAWINGS

Figure 1 is a basic circuit diagram of a quasi resonant (QR) converter powering a load connected to the rectifying stage through a controlled output switch.
Figure 2 depicts a time graph of the control signal of the output switch of the QR converter of figure 1 when the power to be supplied to the load is smaller than a minimum power value for having a soft switching.
Figure 3 is a circuit diagram of a quasi resonant (QR) converter with an output switch controlled according to a method of this disclosure.
Figure 4 is a time graph of the main signals and of the control pulses applied to the output switch for discharging the DC bus of the QR converter of figure 3 at the end of an OFF interval immediately before the beginning of an ON interval.
Figure 5 is a detail view of the time graph of figure 4 during the discharge of the DC bus of the QR converter during an OFF interval.
Figure 6 is a circuit diagram of a quasi resonant (QR) converter with an output switch controlled by a control line that implements a method of this disclosure.
Figure 7 is a time graph of the main signals and of the control pulses applied to the output switch for discharging the DC bus of the QR converter of figure 6 during an OFF interval every time the DC bus is charged.
Figure 8 is a detail view of the time graph of figure 7 during the discharge of the DC bus of the QR converter during an OFF interval.

### DESCRIPTION OF EXEMPLARY EMBODIMENTS

A quasi resonant (QR) converter of the type shown in figure 3, may be controlled so as to prevent the generation of the ticking noise that can be heard when the QR-converter is operated to deliver a power level smaller than the minimum power level for having a soft-switching, or when a "pan detection" operation is carried out before powering the induction coil(s) surmounted by a cooking utensil. This may be done by carrying out, before an ON time interval T₁ of the quasi resonant converter begins during which a load coupled with the L-C resonant pair is powered by the quasi resonant converter, the step of operating on/off either the rectifier stage RECT or the controlled output switch S of the QR converter until the DC voltage on the capacitance Cbus of the DC-bus between the high-side line and the low-side line is decreased below a minimum nominal value, at which the above discussed drawbacks are practically negligible. By discharging the capacitance Cbus of the DC-bus before powering the load, the DC voltage is substantially null when the ON time interval T₁ begins and thus a soft-switching, or a "low hard-switching" (i.e. a hard-switching with a relatively small voltage on the output switch S) is performed because the voltage across the controlled output switch S is at most equal to said minimum nominal value when the output switch S is turned on.

Discharging the capacitance of the DC-bus before powering the load, is an efficient technique for preventing the generation of the ticking noise when the quasi resonant converter is operated by periodically alternating ON time intervals T₁, during which a load coupled with the L-C resonant pair is powered by the quasi resonant converter, to OFF time intervals T₂, during which the load is not powered by the quasi resonant converter. The ticking noise is typically generated when the QR converter is operated to deliver an average power smaller than the minimum power that can be delivered to the load while maintaining the output switch S in soft-switching operation. In these situations, shown for example in Fig. 2, during ON time intervals T₁ the controlled output switch S is driven on/off at a nominal switching frequency of the quasi resonant converter and with a duty-cycle corresponding to said minimum power, whereas during OFF time intervals T₂ the controlled output switch S is kept off, wherein a duration of an ON time interval T₁ and a duration of a subsequent OFF time interval T₂ are adjusted so as an average power delivered to the load is a fraction of the minimum power.

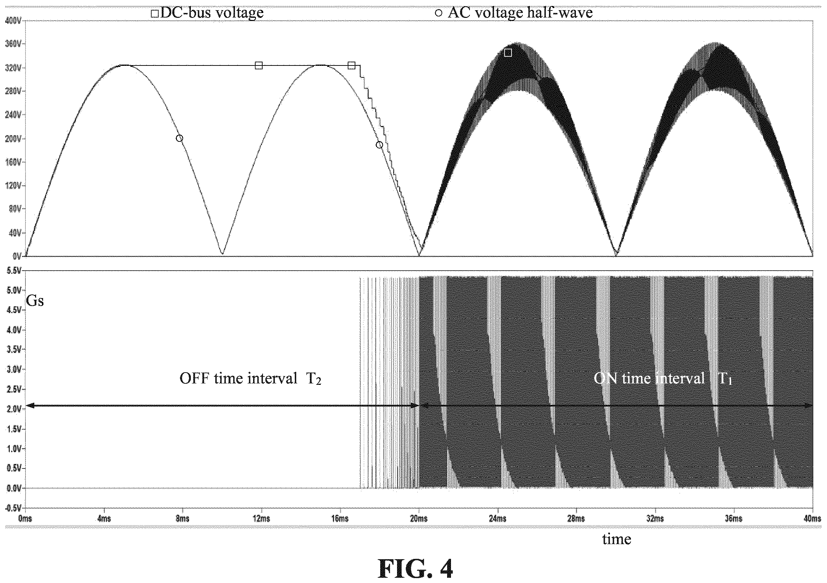

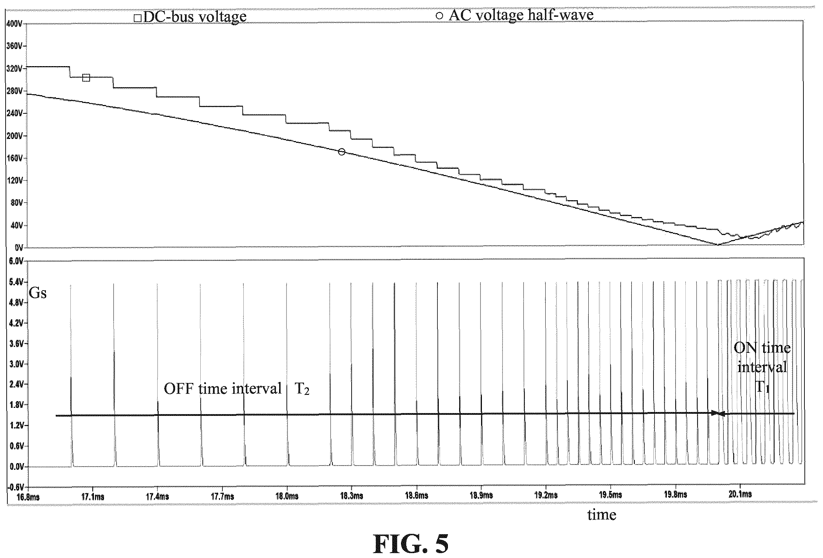

The ticking noise may be avoided by switching on/off the controlled output switch S in such a manner as the DC voltage on the capacitance of the DC-bus between the high-side line and the low-side line is nullified before an ON time interval T₁ begins, as shown in the time graphs of figures 4 and 5. This technique does not require additional components and may be implemented in QR converters by properly driving the output switch before powering the load.

Making reference to the exemplary time graphs of figures 4 and 5, the pulse duration for the command signal of the output switch S can range between 200 ns and 300 ns with a period between 50 us and 300 us. The duration of the entire train of pulses depends on the value of the voltage on the DC-bus capacitance Cbus to be discharged. With a capacitance Cbus in the order of a few uF, typically after a pulse train of 3 ms the DC-bus capacitance Cbus is completely discharged. The system comes from an off interval in which the DC-bus capacitance Cbus is charged. Before starting the delivery, the discharge pattern begins. It is important to notice that, in order for this mode of operation to be effective, the pulse train must begin after a peak of the mains line voltage, otherwise any decrease in the DC-bus voltage obtained by this method would then later be reverted by the operation of the voltage rectifier Rect. In this example, the DC-bus capacitance Cbus has a value of 5 uF and the discharge pattern starts 3 ms before the power delivery. In this specific case with a DC-bus capacitance of 5uF, the pattern is made of 6 pulses with a duration of 250 ns, the pulses being repeated every 200 us, then 10 pulses of the same duration every 100 us and finally 16 pulses of the same duration every 50 us. In general, the pattern and the duration of pulses may be adjusted depending on the DC-bus capacitance in order to discharge it into a maximum time interval established by users according to the needs.

With the exemplified pattern the discharge is almost linear, obtaining a residual voltage on the DC-bus of about 20 V at the beginning of the ON time interval. With a voltage of about 20 V across the output switch S, the power delivery can occur without generating an acoustic noise and in a low hard switching condition (nonnull initial voltage of relatively small value).

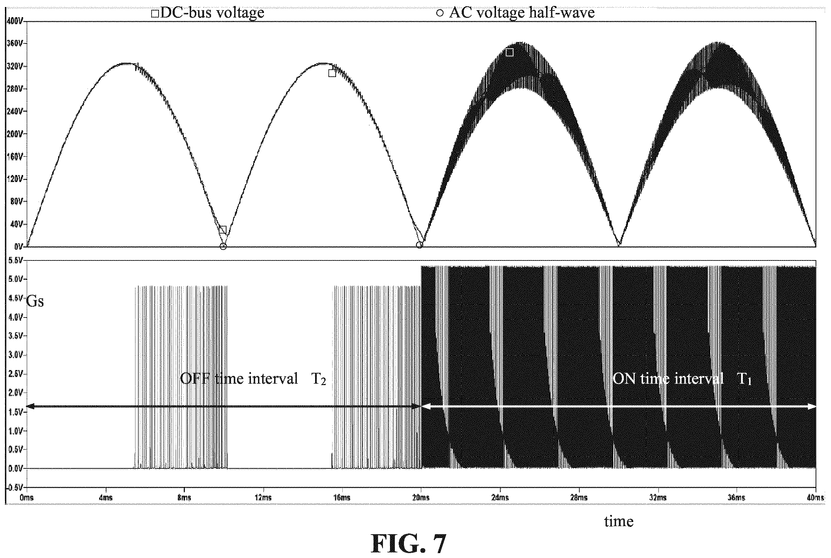

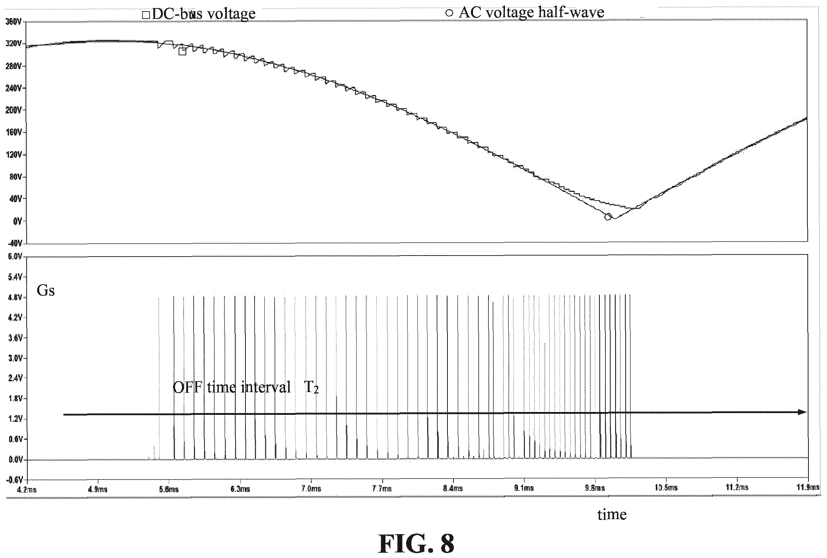

According to an aspect of this disclosure, a QR converter may be equipped with a comparator configured to compare the DC voltage on the capacitance of the DC-bus with a trailing profile of the rectified replica of a half-wave of the AC voltage received at the input AC terminals of the rectifier stage Rect, and configured to generate an error signal corresponding to a difference between the trailing edge of the rectified replica and the DC voltage on the DC-bus. The control unit is then configured to switch on/off the controlled output switch S with a discharge duty-cycle and at a discharge switching frequency determined as a function of the error signal so as to make the DC voltage on the DC-bus track the trailing edge of the rectified replica of a half-wave of the AC voltage, as far as said DC voltage on the DC-bus is nullified, as shown in the exemplary time graphs of figures 7 and 8.

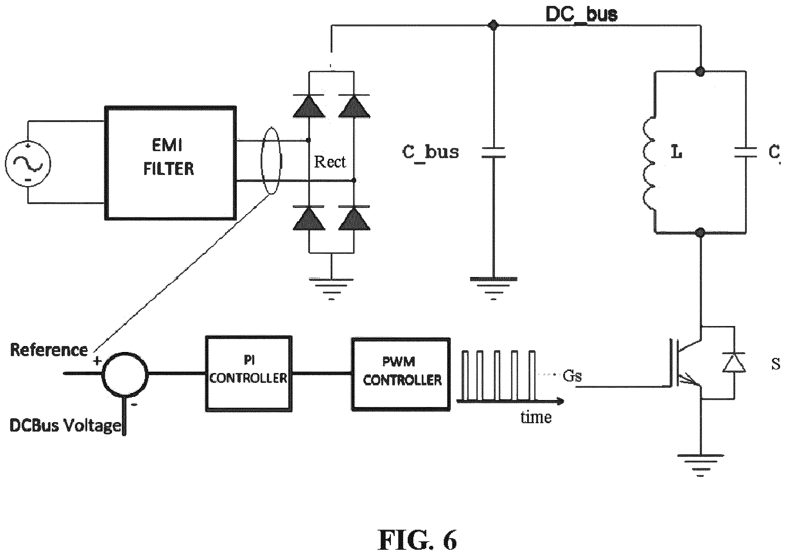

According to an optional aspect, shown in figure 6, the quasi resonant converter may also have a proportional-integral (PI) controller, configured to generate a proportional-integral replica of the error signal, and the control unit (PWM CONTROLLER) may be configured to determine the discharge duty-cycle and the discharge switching frequency of the train of pulses that control the controlled output switch S, in order to make the DC voltage on the DC-bus track the trailing edge of the rectified replica of a half-wave of the AC voltage, as a function of the proportional-integral replica of the error signal. It is to be understood that the above-mentioned PI controller is used only as an exemplary embodiment, and that persons skilled in the art can readily understand the possibility of resorting to controllers of different kinds. It is also to be understood that, while in Fig. 6 the error signal calculation, the PI controller, and the PWM controller are shown as individual parts, they can easily and advantageously be integrated into the main microcontroller used to control the usual operation of the converter. Referring to the exemplary time graphs of figures 7 and 8, depending on the DC-bus capacitance value, the pulses pattern changes according to the response of the PI controller. Figure 7 shows an example in which, using a PI control, a 5 uF capacitance Cbus is discharged, obtaining a DC-bus voltage that follows the mains half-wave. In this case the minimum pulses period may be for example of about 50 us and the duration of the pulse may be between 10 ns and 250 ns (Figure 8). For different values of the capacitance Cbus, the duration of the time interval during which a burst of pulses is generated, as well as the duration of each pulse, may be varied accordingly.

The quasi resonant converters presented above may be used to realize an induction cooktop, for heating an item of cookware, by using an induction heating coil as the inductive component of the L-C resonant pair, configured to be magnetically coupled with the item of cookware to be heated.

## Claims

1. A method of controlling a quasi resonant converter, said quasi resonant converter comprising:
- a rectifier stage (Rect) having input AC terminals, for receiving an AC voltage to be rectified, and a DC-bus having a high-side line for making available a DC voltage on said DC-bus between said high-side line and said low-side line, said DC voltage being generated as a rectified replica of the AC voltage received at the input AC terminals,
- a L-C resonant pair connected between said high-side line and an intermediate node, wherein said L-C resonant pair being configured to be magnetically coupled with a load,
- a controlled output switch (S) connected in series with said L-C resonant pair between said intermediate node and said low-side line,
- a control unit configured to turn on/off said controlled output switch (S);
said method comprising the following steps:
before an ON time interval (T₁) of the quasi resonant converter begins, during which a load coupled with said L-C resonant pair is powered by the quasi resonant converter, operating on/off said controlled output switch (S) to nullify said DC voltage on said DC-bus between said high-side line and said low-side line, so as said DC voltage is null when the ON time interval (T₁) begins.

2. The method of claim 1, further comprising the steps of:
periodically alternating ON time intervals (T₁) of the quasi resonant converter, during which a load coupled with said L-C resonant pair is powered by the quasi resonant converter, to OFF time intervals (T₂) of the quasi resonant converter, during which said load is not powered by the quasi resonant converter;
during said ON time intervals (T₁) of the quasi resonant converter, driving on/off said controlled output switch (S) at a nominal switching frequency of the quasi resonant converter and with a duty-cycle corresponding to a minimum power to be delivered to the load by the quasi resonant converter to perform a soft-switching of said controlled output switch, wherein a duration of an ON time interval of said ON time intervals (T₁) and a duration of a subsequent OFF time interval of said OFF time intervals (T₂) are adjusted so as an average power delivered to said load is a fraction of said minimum power.

3. The method of claim 1 or 2, further comprising carrying out the following steps during said OFF time interval (T₂) of the quasi resonant converter:
comparing the DC voltage on said DC-bus between said high-side line and said low-side line with a trailing edge of the rectified replica of a half-wave of the AC voltage received at the input AC terminals of the rectifier stage (RECT), generating an error signal corresponding to the difference between said trailing edge of the rectified replica and said DC voltage on said DC-bus;
switching on/off said controlled output switch (S) with a discharge duty-cycle and at a discharge switching frequency determined as a function of said error signal so as to make said DC voltage track said trailing edge of the rectified replica of a half-wave of the AC voltage, as far as said DC voltage between said high-side line and said low-side line is nullified.

4. The method of claim 3, further comprising the step of determining said discharge duty-cycle and said discharge switching frequency in function of a proportional-integral replica of the error signal.

5. The method of claim 1 or 2, further comprising the step of:
before an ON time interval begins of the quasi resonant converter, switching on/off said controlled output switch (S) as far as the DC voltage on said DC-bus between said high-side line and said low-side line is nullified.

6. A method of induction heating an item of cookware with an induction cooktop, comprising the steps of:
providing and functionally installing in an induction cooktop a quasi resonant converter, said quasi resonant converter comprising:
- a rectifier stage (Rect) having input AC terminals, for receiving an AC voltage to be rectified, and a DC-bus having a high-side line for making available a DC voltage on said DC-bus between said high-side line and said low-side line, said DC voltage being generated as a rectified replica of the AC voltage received at the input AC terminals,
- a L-C resonant pair connected between said high-side line and an intermediate node, wherein said L-C resonant pair being configured to be magnetically coupled with said item of cookware,
- a controlled output switch (S) connected in series with said L-C resonant pair between said intermediate node and said low-side line,
- a control unit configured to turn on/off said controlled output switch (S);
powering said induction cooktop carrying out the method of controlling said quasi resonant converter according to one of claims from 1 to 5.

7. A quasi resonant converter suitable for implementing the method of claim 3, comprising:
- a rectifier stage (Rect) having input AC terminals, for receiving an AC voltage to be rectified, and a DC-bus having a high-side line for making available a DC voltage on said DC-bus between said high-side line and said low-side line, said DC voltage being generated as a rectified replica of the AC voltage received at the input AC terminals,
- a L-C resonant pair connected between said high-side line and an intermediate node, wherein said L-C resonant pair being configured to be magnetically coupled with a load,
- a controlled output switch (S) connected in series with said L-C resonant pair between said intermediate node and said low-side line,
- a control unit (PWM CONTROLLER) configured to turn on/off said controlled output switch (S),
**characterized in that** said control unit further comprises:
a comparator configured to compare the DC voltage on said DC-bus between said high-side line and said low-side line with a trailing edge of the rectified replica of a half-wave of the AC voltage received at the input AC terminals of the rectifier stage, and configured to generate an error signal corresponding to a difference between said trailing edge of the rectified replica and said DC voltage on said DC-bus;
said control unit (PWM CONTROLLER) being configured to switch on/off said controlled output switch (S) with a discharge duty-cycle and at a discharge switching frequency determined as a function of said error signal so as to make said DC voltage track said trailing edge of the rectified replica of a half-wave of the AC voltage, as far as said DC voltage between said high-side line and said low-side line is nullified.

8. The quasi resonant converter of claim 7, further comprising:
a proportional-integral controller (PI CONTROLLER), configured to generate a proportional-integral replica of the error signal;
wherein said control unit (PWM CONTROLLER) is configured to determine said discharge duty-cycle and said discharge switching frequency in function of said proportional-integral replica of the error signal.

9. An induction cooktop, comprising a quasi resonant converter as defined in one of claims from 7 to 8.
